# EUROPÄISCHE PATENTSCHRIFT

(11) **EP 1 582 443 B1**
(45) Veröffentlichungstag und Bekanntmachung des Hinweises auf die Patenterteilung: **09.09.2009**
(21) Anmeldenummer: 05005687.8
(22) Anmeldetag: 16.03.2005
(51) Int. Cl.: B62D 33/06

(54) **Vorrichtung zum Kippen eines am Fahrzeugrahmen eines Nutzfahrzeugs abgefederten Fahrerhauses**
Tilting apparatus for suspended cabs provided on a truck frame
Dispositif de basculement pour cabines suspendues disposé sur le châssis d'un camion

(30) Priorität: 30.03.2004 DE 102004015351
(43) Veröffentlichungstag der Anmeldung: 05.10.2005
(73) Patentinhaber: MAN Nutzfahrzeuge Aktiengesellschaft, 80995 München (DE)
(72) Erfinder: Übelacker, Andreas, Dipl.-Ing.(TU), 82282 Unterschweinbach (DE); Winkler, Tino, Dipl.-Ing. (FH), 85748 Garching (DE); Nickels, Thomas, Dipl.-Ing. (TU), 81541 München (DE)

(56) Entgegenhaltungen:
- EP-A- 0 520 588
- DE-A1- 3 314 404
- DE-U1- 8 809 201
- JP-A- 58 128 974
- US-A- 2 939 541
- PATENT ABSTRACTS OF JAPAN Bd. 007, Nr. 199 (M-240), 3. September 1983 (1983-09-03) & JP 58 097569 A (SANWA SEIKI KK), 10. Juni 1983 (1983-06-10)

## Beschreibung

Die Erfindung betrifft eine Vorrichtung zum Kippen eines am Fahrzeugrahmen eines Nutzfahrzeugs abgefederten Fahrerhauses gegenüber dem Fahrzeugrahmen nach dem Oberbegriff des Patentanspruches 1.

Eine derartige Vorrichtung ist aus JP 58128974 A bekannt. Bei der bekannten Vorrichtung ist zum Kippen des Fahrerhauses gegenüber dem Fahrzeugrahmen eine von einem Kippzylinder betätigte Kolbenstange vorgesehen. Am vorderen Ende der Kolbenstange befindet sich ein Eingriffsteil, welches mit einer vorderen Ausnehmung und zwei seitlich abstehenden Bolzen ausgestattet ist. Das am Fahrerhaus befestigte Eingriffsteil besitzt einen Bolzen, welcher mit der Ausnehmung des an der Kolbenstange befestigten Eingriffsteils in Eingriff kommen kann. Ferner sind am am Fahrerhaus befestigten Eingriffsteils Ausnehmungen vorgesehen, welche mit den beiden seitlich abstehenden Bolzen am Eingriffsteil der Kolbenstange in Eingriff kommen können. In der Ruheposition ist das an der Kolbenstange vorgesehene Eingriffsteil ausschließlich über den Kippzylinder mit dem Fahrzeugrahmen verbunden. Für die Durchführung des Kippvorganges werden die beiden Eingriffsteile ineinander geschoben, wodurch das Fahrerhaus in allen Bewegungsrichtungen verriegelt wird.

Aus DE 33 14 404 ist eine Vorrichtung zum Kippen eines Fahrerhauses am Fahrzeugrahmen bekannt, dessen schwenkbar mit dem Fahrzeugrahmen verbundener Kippzylinder über ein am vorderen Ende der Kolbenstange des Kippzylinders vorgesehenes Kugelgelenk mit einer am Fahrerhaus schwenkbaren Schwinge auch in Ruheposition verbunden ist. Beim Kippen des Fahrerhauses wird eine an der Kolbenstange vorgesehene Kugelsegmentfläche mit Kugelsegmentflächen an einem am Fahrerhaus vorgesehen Eingriffsteil in Eingriff gebracht, so dass in der gekippten Position in allen Bewegungsrichtungen das Fahrerhaus gesichert ist.

Eine aus DE 198 05 870 A1 bekannte Vorrichtung beinhaltet einen hydraulisch betätigten Kippzylinder, mit dem ein schwenkbar am Fahrzeugrahmen gelagertes hakenförmiges Eingriffsteil mit einem am Fahrerhaus befestigten zweiten Eingriffsteil in Form eines quer zur Hakenöffnung verlaufenden Bolzens beim Kippvorgang in Eingriff gebracht wird. Im normalen Fahrbetrieb befinden sich die beiden Eingriffsteile in voneinander getrennten Ruhepositionen, Im gekippten Zustand des Fahrerhauses ist das am Fahrerhaus befestigte Eingriffsteil nicht in allen Raumrichtungen verriegelt. Bei einem Aufprall auf das stehende Fahrzeug mit dem gekippten Fahrerhaus besteht aufgrund der Abfederung des Fahrerhauses gegenüber dem Fahtzeugrahmen die Gefahr, dass sich der Bolzen entlang der Öffnung des hakenförmigen Eingriffsteil mit der Möglichkeit der Entriegelung bewegen kann.

Aus EP 0 149 810 B1 ist es bekannt, das als Kolbenstange ausgebildete Hubelement, welches vom Kippzylinder angetrieben wird, in einer Anlenkstelle am Fahrerhaus schwenkbar zu befestigen.

Aufgabe der Erfindung ist es, eine Vorrichtung der eingangs genannten Art zu schaffen, bei welcher das Fahrerhaus in der gekippten Position in allen Bewegungsrichtungen, insbesondere gegen ein Zurückverschwenken, mit einfachen Mitteln verriegelt ist.

Diese Aufgabe wird erfindungsgemäß durch die Merkmale des Patentanspruches 1 gelöst.

Bei der Erfindung sind die beiden Eingriffstelle, das erste und zweite Eingriffsteil zumindest am Ende des Kippvorganges in eine solche Position bewegt, in welcher aufgrund der Form der Eingriffsflächen, mit welchem die Eingriffsteile in dieser Position aneinander liegen, in allen drei Raumrichtungen eine Verriegelung des gekippten Fahrerhauses erzielt wird.

Um das erste Eingriffsteil, welches an einer Kolbenstange eines Kippzylinders befestigt ist, aus seiner Ruheposition bis zum Eingriff in das zweite Eingriffsteil zu bringen, wird das von dem Kippzylinder bewegte erste Eingriffsteil vorzugsweise geradlinig in einer bestimmten Richtung bewegt. In dieser bestimmten Bewegungsrichtung ist das zweite Eingriffsteil, welches am Fahrerhaus befestigt ist, welches eine hohlkehlige Ausnehmung aufweist, geöffnet, so dass das erste Eingriffsteil sich durch die Öffnung des zweiten Eingriffteils bis in die Eingriffsposition bewegen kann. Während der sich anschließenden Kippbewegung verdrehen sich die beiden Eingriffsteile gegeneinander, so dass während der Kippbewegung und insbesondere am Ende des Kippvorgangs die aneinander liegenden Eingriffsflächen der beiden Eingriffsteile eine in allen drei Raumrichtungen wirkende Verriegelung herstellen. Auf diese Weise ist sichergestellt, dass auch bei einer stoßartigen Belassung, welche beispielsweise bei einem Auffahrunfall auf das stehende Nutzfahrzeug mit dem gekippten Fahrerhaus entstehen kann, eine sichere Verriegelung in allen Freiheitsgraden erreicht wird.

Das Hubelement ist als eine aus dem Kippzylinder ragende Kolbenstange ausgebildet, an deren vorderem Ende das erste Eingriffsteil befestigt ist. Vorzugsweise wird bis zum Eingriff der beiden Eingriffsteile das Hubelement geradlinig durch die im zweiten Eingriffsteil vorhandene Öffnung bis zur Eingriffsposition bewegt. Hieran schließt sich bei weiterem Antrieb des Hubelements die Kippbewegung des Fahrerhauses an.

Bei normalem Fahrbetrieb befinden sich die beiden Eingriffsteile in voneinander getrennten, Ruhepositionen, so dass die Federung des Fahrerhauses gegenüber dem Fahrzeugrahmen nicht beeinträchtigt wird.

Die Abmessungen der im zweiten Eingriffsteil vorgesehenen Öffnung ist in der Eingriffsposition "ballig" ausgeführt. In dieser Position sind das erste und das zweite Eingriffsteil gegeneinander verschwenkbar, wobei die erforderliche Verschwenkbarkeit der genannten Eingriffsteile im Kippvorgang des Fahrerhauses sichergestellt sein muss.

Durch die ballige Ausführung des genannten zweiten Eingriffsteils, ist es notwendig, dieses Teil zweiteilig aus Fertigungsgründen herzustellen. Das zweite Eingriffsteil besitzt demnach einen größeren Durchals das an der Kolbenstange ausgebildete erste Eingriffsteil. Beim Kippvorgang bewegen sich die beiden Eingriffsteile gegeneinander, wobei die Kolbenstange sich in dem an die Öffnung anschließenden Schlitz des zweiten Eingriffsteils bewegt. Die sich an den Schlitz anschließenden Eingriffsflächen in der hohlkehligen oder balligen Ausnehmung des zweiten Eingriffsteils liegen an den Eingriffsflächen des eingesteckten ersten Eingriffsteils so an, dass ein Lösen der beiden Eingriffsteile aus der Eingriffsposition in jeder Bewegungsrichtung des gekippten Fahrerhauses verhindert wird.

Anhand der Figuren wird an einem Ausführungsbeispiel die Erfindung noch näher erläutert.

Es zeigt
Fig. 1 in schematischer Darstellung in Seitenansicht das Fahrerhaus und die Kippvorrichtung in der Position des normalen Fahrbetriebs;
Fig. 2 schematisch in Seitenansicht den Zeitpunkt des Eingriffs der Kippzylinders am Fah- rerhaus;
Fig. 3 in schematischer Seitenansicht die nach vorne gekippte Position des Fahrerhauses;
Fig. 4 in perspektivischer Darstellung das zweite Eingriffsteil; und
Fig. 5 in Seitenansicht und teilweise geschnittener Darstellung die Position der beiden Ein- griffsteile zueinander in der gekippten Position des Fahrerhauses.

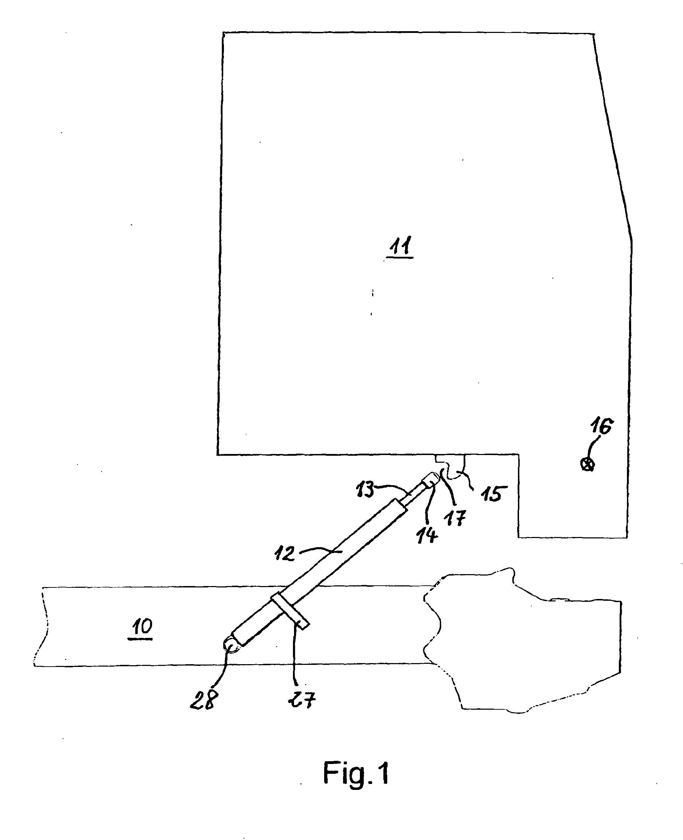

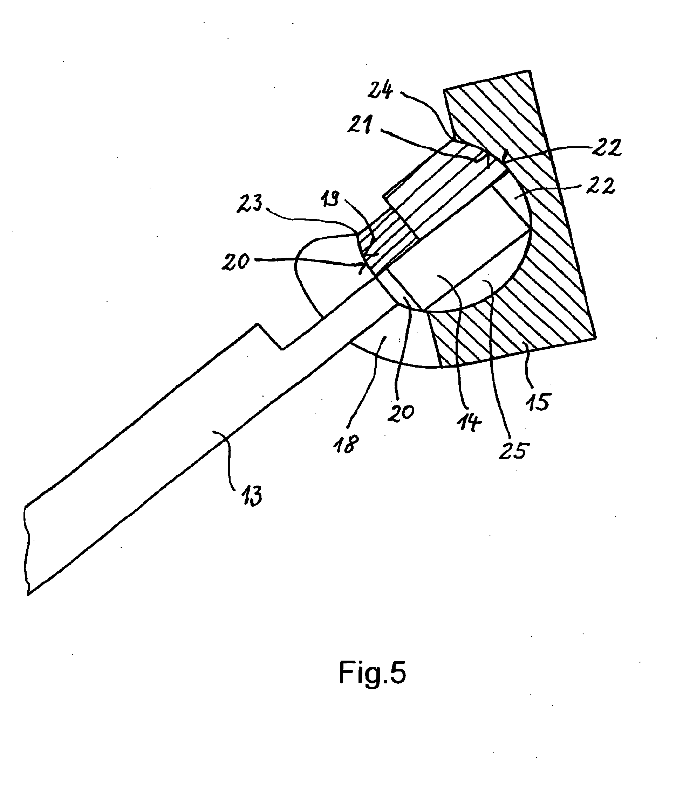

In der Fig. 1 ist schematisch ein Fahrerhaus 11 dargestellt, welches mit Hilfe nicht näher dargestellter Federn in bekannter Weise an einem schematisch dargestellten Fahrzeugrahmen 10 eines Nutzfahrzeugs abgefedert ist. In dieser normalen Fahrposition befinden sich die Bauteile einer Kippvorrichtung zum Kippen des Fahrerhauses 11 in ihren Ruhepositionen. Diese Bauteile enthalten einen Kippzylinder 12, welcher vorzugsweise hydraulisch betätigt wird. Der Kippzylinder 12 ist an einer Befestigungsstelle 28 am Fahrzeugrahmen 10 abgestützt. Aus dem Kippzylinder 12 ragt ein linear antreibbares Hubelement 13 in Form einer Kolbenstange. Am vorderen Ende der Kolbenstange 13 befindet sich das erste Eingriffsteil 14. Das erste Eingriffsteil 14 kann eine zylindrische Mantelfläche aufweisen. An beiden Enden ist je eine kugelkalottenförmige Eingriffsfläche 22 und am hinteren Ende ebenfalls eine kugelförmige Eingriffsfläche 20, welche von der Kolbenstange 13 mittig durchsetzt ist, vorgesehen (Fig. 5).

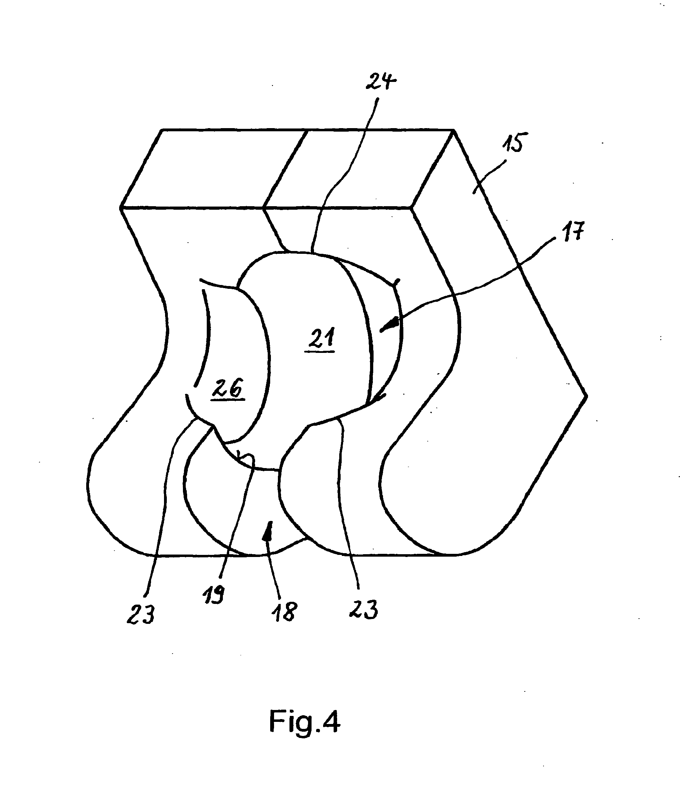

Am Fahrerhaus 11 ist das zweite Eingriffsteil 15 befestigt, das in perspektivischer Darstellung in Fig. 4 gezeigt ist. Das Eingriffsteil 15 besitzt eine Öffnung 17, an die sich ein Schlitz 18 anschließt. Im Innern besitzt das Eingriffsteil 15 eine hohlkehlige oder ballige Ausnehmung 25, in welche das Eingriffsteil 14 durch die Öffnung 17 für einen verriegelnden Eingriff beim Kippvorgang eingeschoben werden kann.

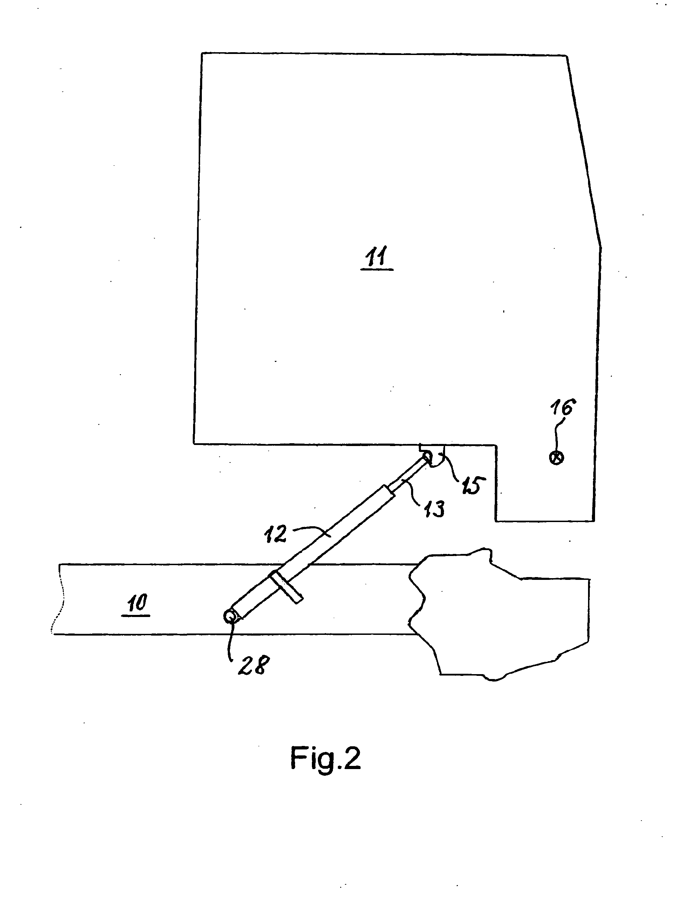

Hierzu wird die Kolbenstange 13 zunächst geradlinig in einer bestimmten Richtung aus der in Fig. 1 dargestellten Position in die in Fig. 2 dargestellte Position durch die Öffnung 17 in die hohlkehlige oder ballige Ausnehmung 25 des zweiten Eingriffsteil 15 eingeschoben. Die Öffnung 17 am zweiten Eingriffsteil 15 ist hierzu zur geradlinigen Bewegungsrichtung des an der Kolbenstange 13 befestigten ersten Eingriffsteils 14 ausgerichtet. Die Abmessungen der Öffnung 17, des zweiten Eingriffsteils, welche von Begrenzungskanten 23 und 24 umgeben ist, sind etwas größer dimensioniert als die Abmessungen des ersten Eingriffsteils 14, so dass dieses durch die Öffnung 17 in die hohlkehlige oder ballige Ausnehmung 25 des zweiten Eingriffsteils eingeschoben werden kann. In der Eingriffsposition liegt die vordere ballige Eingriffsfläche 22 des ersten Eingriffsteils 14 an einer Eingriffsfläche 21 des zweiten Eingriffsteils, welche als balliger Teilhohlraum in der Ausnehmung 25 ausgebildet ist, an. Diese kugelsegmentförmige Eingriffsfläche 21 setzt sich zu beiden Seiten des Schlitzes 18, welcher sich an die Öffnung 17 anschließt, in der Ausnehmung fort und bildet zu beiden Seiten des Schlitzes 18 Eingriffsflächen 19.

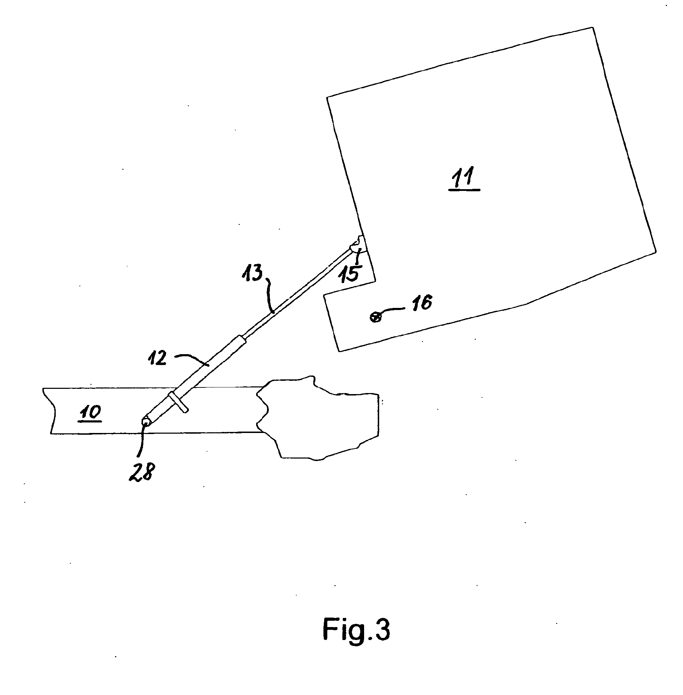

Beim weiteren Herausfahren der Kolbenstange 13 durch den Kippzylinder 12 wird das Fahrerhaus 11 aus der in Fig. 2 dargestellten Position bis in die in der Fig. 3 gezeigte, nach vorne gekippte Position gebracht. Dabei bewegt sich die vordere Eingriffsfläche 22 am ersten Eingriffsteil 14 entlang der Eingriffsfläche 21 des zweiten Eingriffsteils. Die hintere Eingriffsfläche 20, welche von der Kolbenstange 13 durchsetzt ist, bewegt sich in den Bereich der Eingriffsflächen 19, die zu beiden Seiten des sich an die Öffnung anschließenden Schlitzes 18 in der hohlkehligen oder balligen Ausnehmung 25 liegen. In der gekippten Endstellung Fig. 3 nehmen die Eingriffsflächen 19, 20 und 21, 22 an den Eingriffsteilen 14, 15 die in Fig. 5 dargestellte Positionen ein. Während des Kippvorganges hat sich die Kolbenstange 13 aus der mit der Öffnung 17 ausgerichteten Position in den Schlitz 18 bewegt, wie es aus den Fig. 3 und 5 zu ersehen ist.

Da der kugelförmige Teil des ersten Eingriffsteils 14 einen größeren Durchmesser aufweist als die Breite des Schlitzes 18, liegt die hintere kugelförmige Eingriffsfläche 20 des ersten Eingriffsteils 14 an den Eingriffsflächen 19 der Ausnehmung 25 zu beiden Seiten des Schlitzes 18 des zweiten Eingriffteils an, wie es in Fig. 5 dargestellt ist. Der Abstand zwischen den beiden Begrenzungskanten 23 an der Unterseite der Öffnung 17 gegenüber der oben liegenden Begrenzungskante 24 der Öffnung 17 ist geringer als die gesamte axiale Länge des Eingriffsteils 14, wie aus Fig. 5 zu ersehen ist. Hierdurch ist gewährleistet, dass das Eingriffsteil 14 in der gekippten Position des Fahrerhauses 11 weder durch die Öffnung 17 noch durch den Schlitz 18 sich aus der Ausnehmung 25 im Eingriffsteil 15 bewegen kann. Das Eingriffsteil 14 ist in allen drei Raumrichtungen in der Ausnehmung 25 des Eingriffsteils 15 verriegelt. Dabei umfassen die beiden Teile des Eingriffsteils 15, welche zu beiden Seiten des Schlitzes 18 liegen, klauenförmig das Eingriffsteil 14.

Die seitlichen ausgesparten Flächen 26 der Ausnehmung 25, welche mit dem Eingriffsteil 24 nicht in Berührung kommen, können eine beliebige die Funktion der beiden Eingriffsteile nicht beeinträchtigende Form, beispielsweise eine ebene Form aufweisen. In der Fig. 4 ist die sichtbare Begrenzungslinie 26 dargestellt.

Zumindest bei der Bewegung des Kolbenstange 13 aus der in Fig. 1 dargestellten Ruheposition bis in die in Fig. 2 dargestellte Eingriffsposition ist die Bewegungsrichtung durch exakte Positionierung des Kippzylinders 12 zu gewährleisten. Hierzu kann am Kippzylinder 12 eine am Fahrzeugrahmen 10 des Nutzfahrzeugs befestigte Fixiereinrichtung 27 vorgesehen sein. Für den sich daran anschließenden Kippvorgang kann der Kippzylinder 12 für eine Schwenkbewegung in der Befestigungsstelle 28 aus der Fixiereinrichtung 27 gelöst werden oder weiterhin fixiert bleiben.

### Bezugszeichenliste

- 10: Fahrzeugrahmen
- 11: Fahrerhaus
- 12: Kippzylinder
- 13: Kolbenstange
- 14: erste Eingriffsteil
- 15: zweite Eingriffsteil
- 16: Schwenkachse des Fahrerhauses
- 17: Öffnung in dem zweiten Eingriffsteil
- 18: Schlitz in dem zweiten Eingriffsteil
- 19-22: Eingriffsflächen an den Eingriffsteilen
- 23, 24: Begrenzungskanten der Öffnung
- 25: Ausnehmung
- 26: ausgesparte Fläche
- 27: Fixiereinrichtung
- 28: Befestigungsstelle

## Patentansprüche

1. Vorrichtung zum Kippen eines am Fahrzeugrahmen (10) eines. Nutzfahrzeugs abgefederten Fahrerhauses (11) gegenüber dem Fahrzeugrahmen (10) mit einer von einem Kippzylinder (12) betätigten Kolbenstange (13), einem an der Kolbenstange (13) festgelegten ersten Eingriffsteil (14) und einem mit dem Fahrerhaus (11) verbundenen zweiten, eine Öffnung (17) sowie eine hohlkehlige oder ballige Ausnehmung (25) aufweisenden Eingriffsteil (15), wobei die beiden Eingriffsteile (14, 15) im normalen Fahrbetrieb voneinander getrennte Ruhepositionen einnehmen und bei der Hubbewegung der Kolbenstange (13) zum Kippen des Fahrerhauses (11) in einen Eingriff bringbar sind, indem das erste Eingriffsteil (14) beim Kippen des Fahrerhauses (11) durch die Öffnung (17) in die Ausnehmung (25) des zweiten Eingriffsteil (15) einschiebbar ist, wobei in der Ruheposition der Eingriffsteile (14, 15) das erste an an der Kolbenstange (13) festgelegte Eingriffsteil (14) ausschließlich über den Kippzylinder mit dem Fahrzeugrahmen (10) verbunden ist, **dadurch gekennzeichnet, dass** das zweite am Fahrerhaus (11) befindliche Eingriffsteil (15) kugelsegmentförmige Eingriffsflächen (19, 21) und das erste Eingriffsteil (14) an seinen beiden axialen Enden Kugelsegmentflächen (20, 22) aufweisen, wobei beim Kippen des Fahrerhauses (11) die kugelförmigen Eingriffsflächen (19, 21) des zweiten Eingriffsteils (15) und die Kugelsegmentflächen (20, 22) des ersten Eingriffsteils (14) in Eingriff gebracht werden, und dass zwischen den Kugelsegmentflächen (19) des zweiten Eingriffsteils (15), welche mit der am hinteren axialen Ende des ersten Eingriffsteils (14) vorgesehen Kugelsegmentfläche (20) in Eingriff kommen, ein sich an die Öffnung (17) anschießender Schlitz (18), dessen Breite geringer ist als der Durchmesser des kugelförmigen Teils des zweiten Eingriffsteils (15) und in welchem sich die Kolbenstange (13) beim Kippvorgang bewegt, am zweiten Eingriffsteil (15) vorgesehen ist, wobei die axiale Länge des ersten Eingriffsteils (14) größer ist, als der zur Schwenkachse (16) des Fahrerhauses (11) senkrecht verlaufende Abstand von Begrenzungskanten (23, 24) der Öffnung (17).

2. Vorrichtung nach Anspruch 1, **dadurch gekennzeichnet, dass** das erste Eingriffsteil (14) aus seiner Ruheposition bis zum Eingriff in das zweite Eingriffsteil (15) in einer bestimmten Richtung geradlinig bewegt ist.

3. Vorrichtung nach Anspruch 1 oder 2, **dadurch gekennzeichnet, dass** während des Kippvorgangs das erste Eingriffsteil (14) im zweiten Eingriffsteil (15) verschwenkbar gelagert ist.

4. Vorrichtung nach Anspruch 1, **dadurch gekennzeichnet, dass** die Öffnung (17) parallel zur Schwenkachse (16) des Fahrerhauses (11) größere Abmessungen aufweist, als der Schlitz (18).

## Claims

1. Device for tilting a cab (11), which is sprung on the vehicle frame (10) of a commercial vehicle, with respect to the vehicle frame (10), with a piston rod (13) which is actuated by a tilting cylinder (12), a first engagement part (14) which is fixed to the piston rod (13), and a second engagement part (15) which is connected to the cab (11) and has an opening (17) as well as a hollow cone-shaped or ball-shaped recess (25), wherein the two engagement parts (14, 15) assume rest positions which are separate from each other during normal driving operation and can be brought into engagement during the lifting movement of the piston rod (13) in order to tilt the cab (11), in that the first engagement part (14) can be pushed through the opening (17) into the recess (25) in the second engagement part (15) when the cab (11) is tilted, wherein the first engagement part (14), which is fixed to the piston rod (13), is connected to the vehicle frame (10) exclusively by means of the tilting cylinder when the engagement parts (14, 15) are in the rest position, **characterised in that** the second engagement part (15), which is situated on the cab (11), has spherical segment-shaped engagement faces (19, 21), and the first engagement part (14) has spherical segment faces (20, 22) on its two axial ends, wherein the spherical engagement faces (19, 21) of the second engagement part (15) and the spherical segment faces (20, 22) of the first engagement part (14) are brought into engagement during tilting of the cab (11), and that between the spherical segment faces (19) of the second engagement part (15), which come into engagement with the spherical segment face (20) which is provided at the rear axial end of the first engagement part (14), there is provided on the second engagement part (15) a slot (18) which is connected to the opening (17), the width of which slot is less than the diameter of the spherical part of the second engagement part (15) and in which the piston rod (13) moves during the tilting process, wherein the axial length of the first engagement part (14) is greater than the distance which runs perpendicularly to the pivot axis (16) of the cab (11), between limit edges (23, 24) of the opening (17).

2. Device according to claim 1, **characterised in that** the first engagement is moved in a straight line in a defined direction from its rest position until it engages in the second engagement part (15).

3. Device according to claim 1 or 2, **characterised in that** the first engagement part (14) is mounted pivotably in the second engagement part (15) during the tilting process.

4. Device according to claim 1, **characterised in that** the opening (17) has greater dimensions parallel to the pivot axis (16) of the cab (11) than the slot (18).

## Revendications

1. Dispositif pour basculer une cabine (11) suspendue au cadre de véhicule (10) d'un véhicule industriel vis-à-vis d'un cadre de véhicule (10), avec une tige de piston (13) actionnée par un vérin de basculement (12), une première pièce de prise (14) fixée à la tige de piston (13) et une deuxième pièce de prise (15) reliée à la cabine (11) et présentant une ouverture (17) ainsi qu'un évidement (25) concave ou bombé, auquel cas les deux pièces de prise (14, 15) prennent des positions de repos séparées l'une de l'autre en mode de fonctionnement normal et peuvent être mises en prise en cas de mouvement de course de la tige de piston (13) pour basculer la cabine (11) tandis que la première pièce de prise (14) peut être enfoncée dans l'évidement (25) de la deuxième pièce de prise (15) à travers l'ouverture (17) lors du basculement de la cabine (11), auquel cas, dans la position de repos des pièces de prise (14, 15), la première pièce de prise (14) fixée à la tige de piston (13) est reliée au cadre de véhicule (10) exclusivement par le biais du vérin de basculement, **caractérisé en ce que** la deuxième pièce de prise (15) se trouvant sur la cabine (11) présente des surfaces de prise (19, 21) en forme de segment sphérique et la première pièce de prise (14) présente des surfaces à segments sphériques (20, 22) à ses deux extrémités axiales, auquel cas, lors du basculement de la cabine (11), les surfaces de prise de forme sphérique (19, 21) de la deuxième pièce de prise (15) et les surfaces à segments sphériques (20, 22) de la première pièce de prise (14) sont mises en prise, et **en ce que**, entre les surfaces à segments sphériques (19) de la deuxième pièce de prise (15) qui viennent en prise avec la surface à segments sphériques (20) prévue à l'extrémité axiale arrière de la première pièce de prise (14), une fente (18) se raccordant à l'ouverture (17), dont la largeur est inférieure au diamètre de la partie sphérique de la deuxième pièce de prise (15) et dans laquelle la tige de piston (13) se déplace lors du basculement, est prévue sur la deuxième pièce de prise (15), auquel cas la longueur axiale de la première pièce de prise (14) est supérieure à la distance s'étendant verticalement par rapport à l'axe de pivotement (16) de la cabine (11) entre les bords de délimitation (23, 24) de l'ouverture (17).

2. Dispositif selon la revendication 1, **caractérisé en ce que** la première pièce de prise (14) est déplacée de manière rectiligne dans un sens déterminé à partir de sa position de repos jusqu'à la prise dans la deuxième pièce de prise (15).

3. Dispositif selon la revendication 1 ou 2, **caractérisé en ce que**, pendant le basculement, la première pièce de prise (14) est fixée de manière pivotante dans la deuxième pièce de prise (15).

4. Dispositif selon la revendication 1, **caractérisé en ce que** l'ouverture (17) présente des dimensions plus importantes que la fente (18) parallèlement à l'axe de pivotement (16) de la cabine (11).
